# EUROPEAN PATENT APPLICATION

(11) **EP 4 682 758 A1**
(43) Date of publication of application: **21.01.2026**
(21) Application number: 23928522.4
(22) Date of filing: 17.03.2023
(51) Int. Cl.: G06K 19/077, G06K 19/02

(54) **RFID TAG**

(71) Applicant: Fujitsu Frontech Limited, Inagi-shi, Tokyo 206-8555 (JP)
(72) Inventor: YOSHIDA, Takuma, Inagi-shi, Tokyo 206-8555 (JP)
(74) Representative: Haseltine Lake Kempner LLP
(86) International application number: PCT/JP2023/010654
(87) International publication number: WO 2024/194937

(57) **Abstract**

An RFID tag (1) includes an inlay (5) and a tube member (6) having elasticity and having the inlay (5) housed therein from one end portion (5A) to another end portion (5B) in a longitudinal direction (Y direction) of the inlay (5), the inlay (5) having a long shape and having: a semiconductor element (7); a substrate (8) with an antenna pattern (9) formed to be connected to the semiconductor element (7); and a protective member to protect both surfaces of the substrate (8) in a thickness direction (Z direction). The inlay (5) has a size formed to be smaller than an inner diameter of the tube member (6), the size being in a lateral direction (X direction) of the inlay (5), and has an engagement portion (12) formed at the other end portion (5B) of the inlay (5) in the longitudinal direction (Y direction), the engagement portion (12) having been extended in the lateral direction (X direction) of the inlay (5) and engaging with an inner surface (11) of the tube member (6).

## Description

### Field

The present invention relates to RFID tags. Background

A radio frequency identification (RFID) element, a so-called inlay (inlet), has been known, the RFID element having a substrate where a semiconductor element and an antenna pattern have been provided, both surfaces of the substrate in a thickness direction having been protected by protective members. Inlays of this kind are, for example, attached to linen, such as clothing and towels in hotels and hospitals, and used as RFID tags (integrated circuit (IC) tags) for management of the linen.

### Citation List

### Patent Literature

Patent Literature 1: Japanese Laid-open Patent Publication No. 2019-121933

### Summary

### Technical Problem

External pressure tends to be applied to an RFID tag, which is attached to linen, due to spin-drying performed in a process of washing the linen, for example. Therefore, for increasing durability of the RFID tag against the external pressure, a structure having an inlay inserted between elastic members made of silicone rubber, for example, may be considered. However, manufacturing an RFID tag having such a structure has a problem in that a process of bonding elastic members to an inlay to have the inlay inserted between the elastic members is troublesome, and productivity of the RFID tag is thus low. In particular, manufacturing the RFID tag using an automated machine significantly lowers the productivity, and causes an increase in equipment cost.

In view of the foregoing, techniques disclosed herein aim to provide an RFID tag that enables its durability to be increased, a manufacturing process for the RFID tag to be simplified, and productivity of the RFID tag to be increased.

### Solution to Problem

According to an aspect of the embodiments, an RFID tag includes: an inlay that has a long shape and has: a semiconductor element; a substrate with an antenna pattern, which is formed to be connected to the semiconductor element; and a protective member, which protects both surfaces of the substrate in a thickness direction; and a tube member having elasticity and having the inlay housed therein from one end portion to another end portion of the inlay in a longitudinal direction, wherein the inlay has a size formed to be smaller than an inner diameter of the tube member, the size being in a lateral direction of the inlay, and has an engagement portion, which is formed at the other end portion of the inlay in the longitudinal direction, the engagement portion having been extended in the lateral direction of the inlay and engaging with an inner surface of the tube member. Advantageous Effects of Invention

According to an aspect of an RFID tag disclosed by the present application, durability of the RFID tag is able to be increased, a manufacturing process for the RFID tag is able to be simplified, and productivity of the RFID tag is able to be increased.

### Brief Description of Drawings

FIG. 1 is a plan view of an RFID tag according to an embodiment.
FIG. 2 is a side view of the RFID tag according to the embodiment.
FIG. 3 is a sectional view of the RFID tag according to the embodiment.
FIG. 4 is a sectional view of a tube member according to the embodiment.
FIG. 5 is an enlarged plan view of engagement portions of an inlay according to the embodiment.
FIG. 6 is a sectional view of a state where the inlay according to the embodiment is inserted into the tube member.
FIG. 7 is a plan view for illustration of a state of use of the RFID tag according to the embodiment.
FIG. 8 is a diagram for illustration of a manufacturing apparatus for the RFID tag according to the embodiment.
FIG. 9 is a sectional view of main parts of an RFID tag according to a modified example.

### Description of Embodiments

An embodiment of an RFID tag disclosed by this application will hereinafter be described in detail on the basis of the drawings. The RFID tag, disclosed by this application, is not to be limited by the following embodiment.

### Embodiment

### RFID Tag

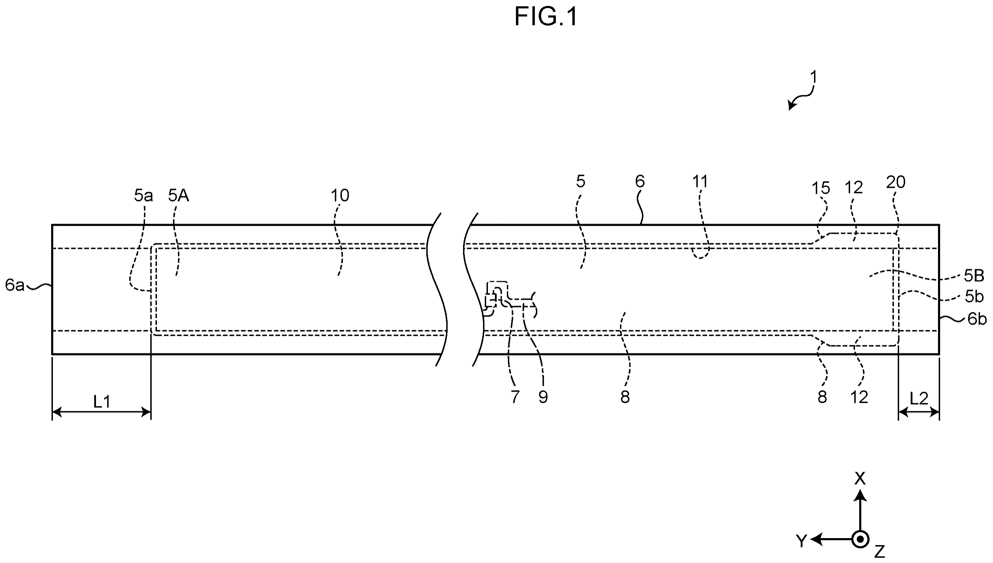

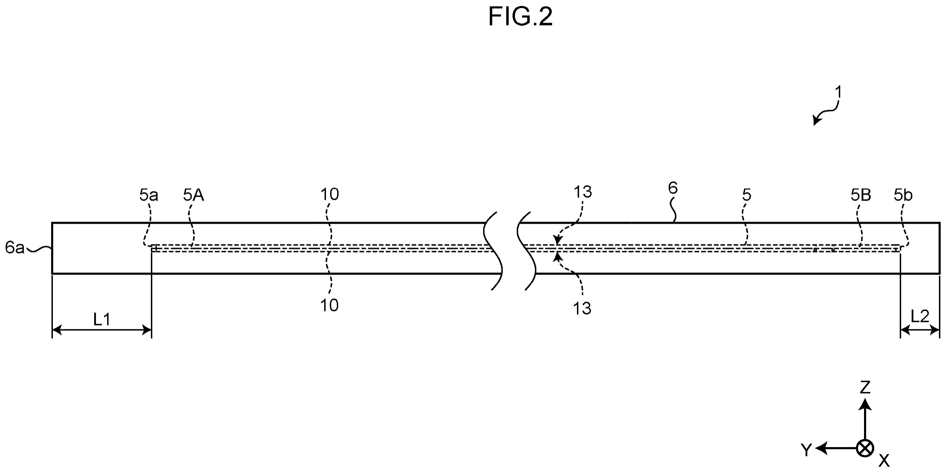

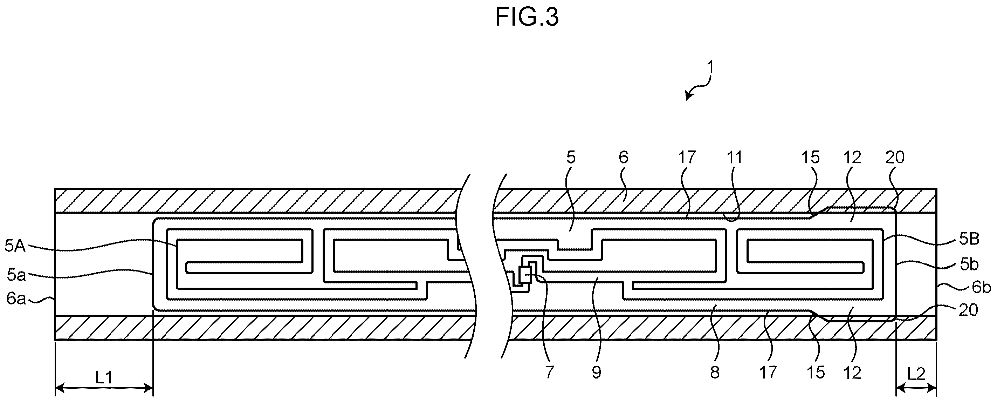

FIG. 1 is a plan view of an RFID tag according to an embodiment. FIG. 2 is a side view of the RFID tag according to the embodiment. FIG. 3 is a sectional view of the RFID tag according to the embodiment.

As illustrated in FIG. 1, FIG. 2, and FIG. 3, an RFID tag 1 according to this embodiment includes: an inlay 5 having an outer shape formed in a rectangular long shape, having a semiconductor element 7 and an antenna pattern (antenna element) 9, and having a long shape; and a tube member 6 having the inlay 5 housed therein from one end portion 5A to another end portion 5B in a longitudinal direction of the inlay 5 and having elasticity. By the inlay 5 being housed inside the tube member 6 in this manner, the elasticity of the tube member 6 increases durability of the RFID tag 1, the durability being against external pressure applied to the inlay 5.

For the sake of illustration, a lateral direction of the RFID tag 1 will be referred to as an X direction, a longitudinal direction of the RFID tag 1 as a Y direction, and a thickness direction of the RFID tag 1 as a Z direction, in FIG. 1. In other words, a lateral direction of the inlay 5 that the RFID tag 1 has will be referred to as the X direction, a longitudinal direction of the inlay 5 and a tube axis direction (longitudinal direction) of the tube member 6 as the Y direction, and a thickness direction of the inlay 5 as the Z direction. In the drawings subsequent to FIG. 1, the X, Y, and Z directions are designated similarly to FIG. 1.

### Inlay

The inlay 5 has: the semiconductor element 7; a substrate 8 having the antenna pattern 9 formed thereon and having a long shape, the antenna pattern 9 being connected to the semiconductor element 7; and a protective film 10 serving as a protective member provided to protect both surfaces of the substrate 8 in the thickness direction (Z direction), and the inlay 5 has been formed to have a long rectangular outer shape. For example, the inlay 5 has been formed to have a length of about 50 mm in the longitudinal direction (Y direction), a width of about 4.5 mm in the lateral direction (X direction), and a thickness of less than 1 mm in the thickness direction (Z direction).

The semiconductor element 7 has, for example, an integrated circuit (IC) used therein, and is arranged at the longitudinal direction (Y direction) center of the substrate 8 and the lateral direction (X direction) center of the substrate 8, on the substrate 8. The protective film 10 has been formed of, for example, a resin material, such as polyethylene terephthalate (PET), and has been attached to both surfaces of the substrate 8 with an adhesive.

The inlay 5 is formed such that a size of the inlay 5 in the lateral direction (X direction) is smaller than an inner diameter of the tube member 6. Furthermore, the inlay 5 has engagement portions 12, which are formed at the other end portion 5B of the inlay 5 in the longitudinal direction (Y direction), the engagement portions 12 engaging with inner surfaces 11 of the tube member 6. The engagement portions 12 is extended outward in the lateral direction (X direction) of the inlay 5, from side surfaces 17 of the inlay 5 in the lateral direction (X direction).

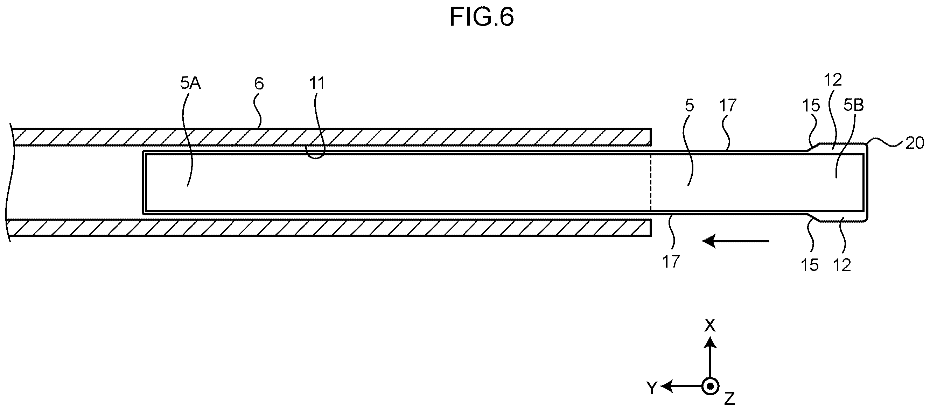

In other words, the inlay 5 has the engagement portions 12, which is formed near a rear end thereof in an insertion direction (Y direction), the rear end being opposite to an end where the one end portion 5A is, that is, a front end thereof in the insertion direction (Y direction), the one end portion 5A being inserted inside the tube member 6, the insertion direction being a direction in which the one end portion 5A is inserted into the tube member 6 (see FIG. 6).

The inlay 5, which is inserted in the tube member 6, is readily fixed at a predetermined position inside the tube member 6, by the engagement portions 12 engaging with the inner surfaces 11 of the tube member 6. Therefore, the engagement portions 12 function as position restriction portions to restrict position of the inlay 5 in the tube axis direction (Y direction) of the tube member 6. Details of a shape of the engagement portions 12 will be described later.

### Tube Member

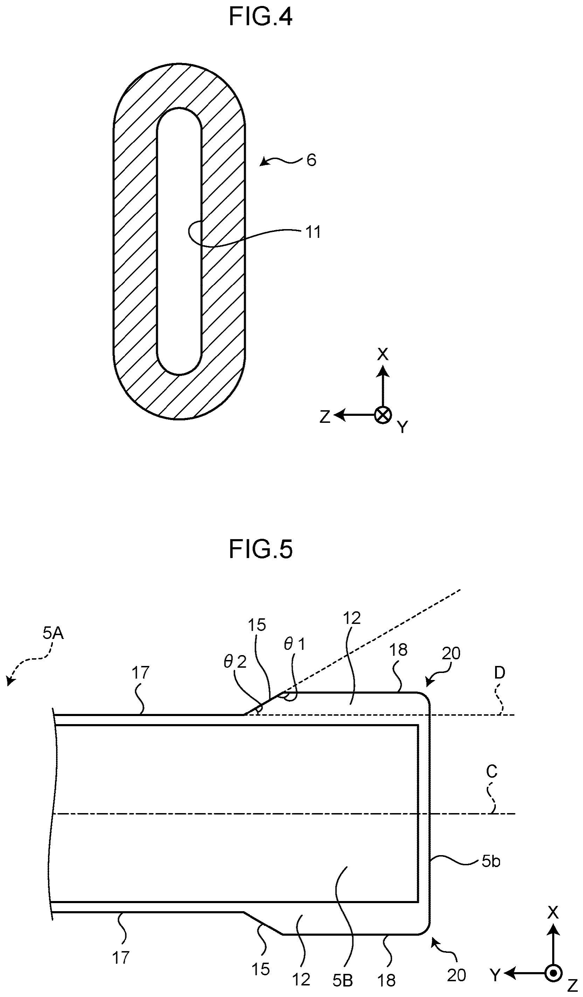

FIG. 4 is a sectional view of the tube member 6 according to the embodiment. As illustrated in FIG. 1, FIG. 2, and FIG. 4, the tube member 6 has been formed as an oval tube having an oval sectional shape, using, for example, an elastic material, such as silicone rubber. In other words, the tube member 6 is formed to have a flattened sectional shape, which is flattened in the thickness direction (Z direction) of the inlay 5, the flattened sectional shape being of a cross section orthogonal to the longitudinal direction (Y direction) of the RFID tag 1. For example, the tube member 6 has a length of about 60 mm in the tube axis direction (Y direction), an outer diameter of about 6.5 mm in a major axis direction (X direction), and an outer diameter of about 2.5 mm in the lateral direction (Z direction).

Generation of gaps between both surfaces 13 (see FIG. 2) of the inlay 5 in the thickness direction (Z direction) and the inner surfaces 11 of the tube member 6, is thereby minimized, movement of the inlay 5 in the thickness direction (Z direction) of the inlay 5 inside the tube member 6, is thereby minimized, and the tube member 6 thereby enables the inlay 5 to be prevented from being damaged and the inlay 5 from falling off the tube member 6. The tube member 6 is not limited to the oval tube and may be formed in another shape, such as that of a rectangular pipe having a rectangular cross section.

### Shape of Engagement Portions

FIG. 5 is an enlarged plan view of the engagement portions 12 of the inlay 5 according to the embodiment. FIG. 6 is a sectional view of a state where the inlay 5 according to the embodiment is inserted into the tube member 6. As illustrated in FIG. 3 and FIG. 5, the engagement portions 12 of the inlay 5 are formed on both sides of the inlay 5 in the lateral direction (X direction). The engagement portions 12 are formed in linear symmetry with a center line C in the lateral direction (X direction) of the inlay 5. The engagement portions 12 are formed by cutting the substrate 8 in a desired outer shape by press working, the substrate 8 having the protective film 10 bonded thereto. For example, the engagement portions 12 are formed so that an amount of protrusion of the engagement portions 12 from the side surfaces 17 of the inlay 5 is about 0.5 mm in the lateral direction (X direction) of the inlay 5. Furthermore, the engagement portions 12 are formed to be about 4 mm in the longitudinal direction (Y direction) of the inlay 5.

As illustrated in FIG. 5, the engagement portions 12 each have, formed thereon, an inclined surface 15 inclined with respect to the longitudinal direction (Y direction) of the inlay 5, the inclined surface 15 being at an end of the engagement portion 12, the end being near the one end portion 5A of the inlay 5. The inclined surface 15 is inclined to form an obtuse angle θ1 to an outer peripheral surface 16 of the engagement portion 12, the outer peripheral surface 16 extending along the longitudinal direction (Y direction) of the inlay 5. Furthermore, an inclination angle θ2 of the inclined surface 15 is set to, for example, about 30 degrees, and preferably 45 degrees or less, the inclination angle θ2 being an angle to a virtual surface D, which is extended from the side surface 17 of the inlay 5 along the longitudinal direction (Y direction) of the inlay 5.

As illustrated in FIG. 6, when the engagement portions 12 of the inlay 5 are inserted with respect to the inner surfaces 11 of the tube member 6, the inner surfaces 11 of the tube member 6 thereby slide easily along the inclined surfaces 15, and the insertion load, which is generated upon insertion of the engagement portions 12 into the tube member 6, is thus able to be reduced. As a result, damage, such as buckling of the inlay 5, caused by the insertion load, which is applied to a region near the engagement portions 12 upon insertion of the engagement portions 12 into the tube member 6, is able to be prevented from occurring, and the engagement portions 12 are able to be smoothly inserted in and properly engaged with the inner surfaces 11 of the tube member 6.

Furthermore, the engagement portions 12 each have a corner portion 20, which is formed at an opposite end of the engagement portion 12, the opposite end being opposite to the end near the one end portion 5A of the inlay 5. The corner portion 20 is formed of the outer peripheral surface 18, which extends along the longitudinal direction (Y direction) of the inlay 5 and a later described other end surface 5b, which extends along the lateral direction (X direction) of the inlay 5. When the engagement portions 12 engage with the inner surfaces 11 of the tube member 6, the corner portions 20 thereby go into the inner surfaces 11 of the tube member 6, and the effect of restricting movement of the engagement portions 12 in the tube axis direction (Y direction) of the tube member 6, is thus increased. Therefore, movement of the inlay 5 inside the tube member 6 in the longitudinal direction (Y direction) of the inlay 5, is able to be adequately restricted. Furthermore, by having right-angled corners, for example, the corner portions 20 easily maintain their position where the corner portions 20 have gone into the inner surfaces 11 of the tube member 6, and the effect of restricting movement of the inlay 5 inside the tube member 6, is thus able to be increased further.

In addition, by the engagement portions 12 having the corner portions 20, the effect of restricting movement of the engagement portions 12 is increased as mentioned above, and the inlay 5 is thus able to be prevented from falling off the tube member 6 even if the amount of insertion of the engagement portions 12 in the tube axis direction (Y direction) of the tube member 6 is lessened. As a result, reducing the amount of insertion of the engagement portions 12, enables a decrease in the total length of the tube member 6, and thus downsizing of the RFID tag 1.

Furthermore, the engagement portions 12, which is formed on both sides of the inlay 5 in the lateral direction (X direction), enables the inlay 5 to avoid coming into contact with the inner surfaces 11 of the tube member 6, and to be smoothly inserted when part of the inlay 5 is inserted into the tube member 6, the part being from the one end portion 5A to the engagement portions 12, and enables the engagement portions 12 to be respectively engaged with the inner surfaces 11 of the tube member 6 when insertion operation of the inlay 5 is ended. That is, the insertion load, which is generated in the inlay 5 upon the insertion into the tube member 6, is able to be minimized, and the engagement portions 12 enable adequate restriction of the movement of the inlay 5 inside the tube member 6.

As illustrated in FIG. 1, FIG. 2, and FIG. 3, one end surface 5a of the one end portion 5A and the other end surface 5b of the other end portion 5B, of the inlay 5 housed in the tube member 6, are positioned inside the tube member 6. A first distance L1 is larger than a second distance L2, in the tube axis direction (Y direction) of the tube member 6, the first distance L1 being from the one end surface 5a of the inlay 5 to one end surface 6a of the tube member 6, the one end surface 6a being positioned near the one end portion 5A, the second distance L2 being from the other end surface 5b of the inlay 5 to another end surface 6b of the tube member 6, the other end surface 6b being positioned near the other end portion 5B. That is, the first distance L1 and the second distance L2 in the RFID tag 1 satisfy a relation, "L1 > L2". For example, the first distance L1 is set to about 5 mm and the second distance L2 to about 2 mm.

In the inlay 5, by the engagement portions 12 having the inclined surfaces 15 and the corner portions 20 as described above, the engagement portions 12 inside the tube member 6 tend to move toward the inclined surfaces 15 rather than moving toward the corner portions 20, in the longitudinal direction (Y direction) of the inlay 5. That is, the engagement portions 12 inside the tube member 6 tend to move forward (toward the one end portion 5A) more easily in the insertion direction (Y direction) as compared to their movement backward (toward the other end portion 5B) in the insertion direction (Y direction) of the inlay 5. In consideration of this tendency, maintaining the first distance L1 larger than the second distance L2 as described above, enables the inlay 5 to be adequately prevented from falling off the tube member 6 even if the inlay 5 has moved toward the one end portion 5A of the inlay 5 inside the tube member 6.

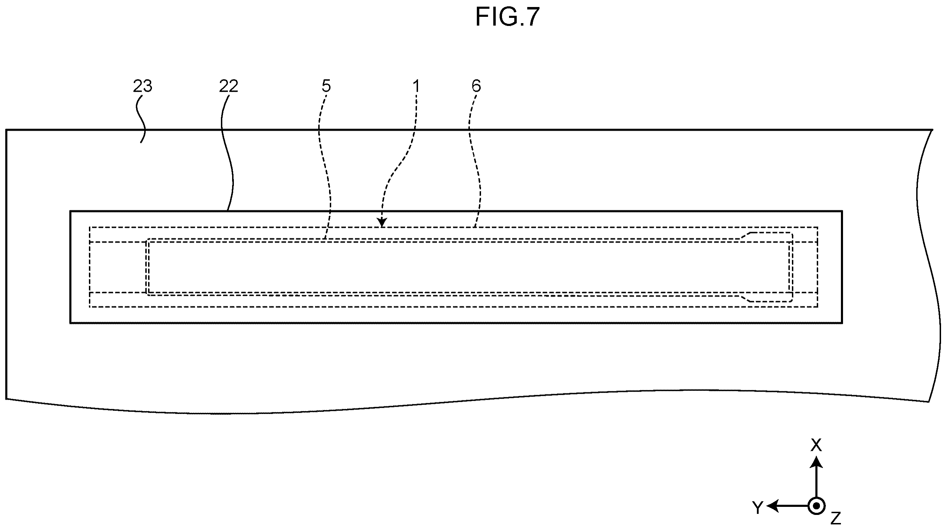

FIG. 7 is a plan view for illustration of a state of use of the RFID tag 1 according to the embodiment. As illustrated in FIG. 7, the RFID tag 1 according to the embodiment may include a bag 22 formed of nonwoven fabric or cloth, the bag 22 having the tube member 6 further housed therein. The bag 22 is formed to surround the entirety of the tube member 6, and is fixed to linen 23 with an adhesive member (not illustrated in the drawings), such as adhesive tape, for example. The bag 22 made of cloth thereby enables feel of the RFID tag 1 to imitate that of the linen 23, and the RFID tag 1 is thereby able to be hidden by the bag 22 from the exterior. Therefore, reduction in the feel of the linen 23 with the RFID tag 1 attached, is able to be minimized, and a change in the exterior of the linen 23 is able to be minimized.

### Manufacturing Apparatus for RFID Tag

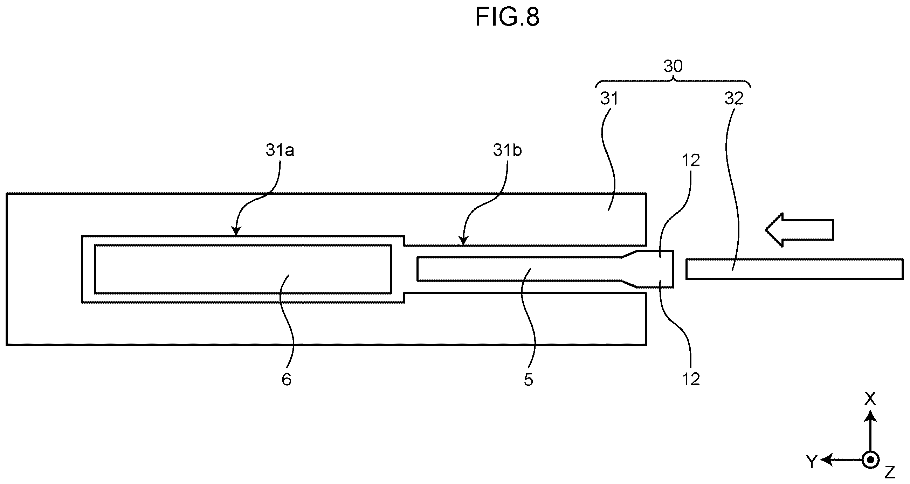

The following description is on a manufacturing apparatus for the RFID tag 1 described above. FIG. 8 is a diagram for illustration of the manufacturing apparatus for the RFID tag 1 according to the embodiment.

As illustrated in FIG. 8, a manufacturing apparatus 30 used in a process of manufacturing the RFID tag 1, includes a guide jig 31 where the tube member 6 and the inlay 5 are placed, and a plunger 32 that is plunged into the guide jig 31. The guide jig 31 has a holding recessed portion 31a, which holds the tube member 6, and a guide channel 31b, which guides the inlay 5 in the insertion direction to the tube member 6 held in the holding recessed portion 31a. Furthermore, although not illustrated in the drawings, the manufacturing apparatus 30 includes a supply mechanism, which supplies the tube member 6 and the inlay 5 to the guide jig 31, a movement mechanism, which moves the plunger 32, and a controller, which controls each of these mechanisms.

Using the manufacturing apparatus 30 described above, facilitates insertion of the inlay 5 into the tube member 6, and enables the inlay 5 to be readily fixed inside the tube member 6 by means of the engagement portions 12, the process of manufacturing the RFID tag 1 is thus able to be simplified, and productivity of the RFID tag 1 is thus able to be increased.

### Method of Manufacturing RFID Tag

A method of manufacturing the RFID tag 1 described above has: inserting the inlay 5 into the tube member 6, housing the inlay 5 inside the tube member 6 from the one end portion 5A to the other end portion 5B in the longitudinal direction (Y direction) of the inlay 5, and engaging the engagement portions 12 of the inlay 5 with the inner surfaces 11 of the tube member 6.

### Effects of Embodiment

As described above, the RFID tag 1 according to the embodiment includes the inlay 5 having a long shape, and the tube member 6 where the inlay 5 is housed from the one end portion 5A to the other end portion 5B in the longitudinal direction (Y direction) of the inlay 5, the tube member 6 having elasticity. The inlay 5 is formed such that the size of the inlay 5 in the lateral direction (X direction) is smaller than the inner diameter of the tube member 6, and the engagement portions 12 extended in the lateral direction (X direction) of the inlay 5 and engaging with the inner surfaces 11 of the tube member 6, have been formed at the other end portion 5B in the longitudinal direction (Y direction) of the inlay 5. Durability against external pressure applied in spin-drying upon washing of the linen 23 using the RFID tag 1, is thereby able to be increased by the elasticity of the tube member 6, and inserting the inlay 5 in the tube member 6 and fixing the inlay 5 by means of the engagement portions 12, enable the inlay 5 to be prevented from falling off the tube member 6. Therefore, the RFID tag 1 enables the durability to be increased, the process of manufacturing the RFID tag 1 to be simplified, and the productivity to be increased.

Furthermore, the inclined surfaces 15, which is inclined with respect to the longitudinal direction (Y direction) of the inlay 5, is formed on the engagement portions 12 of the inlay 5 in the RFID tag 1 according to the embodiment, the inclined surfaces 15 being at the ends of the engagement portions 12, the ends being near the one end portion 5A of the inlay 5, and the inclined surfaces 15 is inclined to form the obtuse angle θ1 to the outer peripheral surfaces 18 of the engagement portions 12, the outer peripheral surfaces 18 extending along the inner surfaces 11 of the tube member 6. When the engagement portions 12 of the inlay 5 are inserted with respect to the inner surface 11 of the tube member 6, the inner surfaces 11 of the tube member 6 thereby slide easily along the inclined surfaces 15, and the insertion load, which is generated upon insertion of the engagement portions 12 into the tube member 6, is thus able to be reduced. As a result, damage, such as buckling of the inlay 5, caused by the insertion load applied to a region near the engagement portions 12 upon insertion of the engagement portions 12 into the tube member 6, is able to be prevented from occurring, and the engagement portions 12 are able to be smoothly inserted in and properly engaged with the inner surfaces 11 of the tube member 6.

Furthermore, the engagement portions 12 of the inlay 5 in the RFID tag 1 according to the embodiment each have the corner portion 20 formed at the opposite end of the engagement portion 12, the opposite end being opposite to the end near the one end portion 5A of the inlay 5, and the corner portions 20 is formed of the outer peripheral surfaces 18, which extends along the longitudinal direction (Y direction) of the inlay 5, and the other end surface 5b, which extends along the lateral direction (X direction) of the inlay 5. When the engagement portions 12 engage with the inner surfaces 11 of the tube member 6, the corner portions 20 thereby go into the inner surfaces 11 of the tube member 6, and the effect of restricting the movement of the engagement portions 12 is thus increased, the movement being relative to the tube member 6. Therefore, the movement of the inlay 5 inside the tube member 6 in the longitudinal direction (Y direction) of the inlay 5, is able to be adequately restricted. In addition, the corner portions 20 increase the effect of restricting the movement of the engagement portions 12, and the inlay 5 is thus able to be prevented from falling off the tube member 6 even if the amount of insertion of the engagement portions 12 in the tube axis direction (Y direction) of the tube member 6 is lessened. As a result, reducing the amount of insertion of the engagement portions 12 enables a decrease in the total length of the tube member 6, and thus downsizing of the RFID tag 1.

Furthermore, the tube member 6 in the RFID tag 1 according to the embodiment is formed to have a flattened sectional shape flattened in the thickness direction (Z direction) of the inlay 5. Generation of gaps between both surfaces 13 of the inlay 5 in the thickness direction (Z direction) 5 and the inner surfaces 11 of the tube member 6, is thereby minimized, the movement of the inlay 5 in the thickness direction (Z direction) of the inlay 5 inside the tube member 6, is thereby minimized, and the inlay 5 is thereby able to be prevented from being damaged or from falling off the tube member 6.

Furthermore, the one end surface 5a at the one end portion 5A and the other end surface 5b at the other end portion 5B, of the inlay 5 in the RFID tag 1 according to the embodiment, are positioned inside the tube member 6, and the first distance L1 is larger than the second distance L2, in the tube axis direction (Y direction) of the tube member 6, the first distance L1 being from the one end surface 5a of the inlay 5 to the one end surface 6a of the tube member 6, the one end surface 6a being positioned near the one end portion 5A, the second distance L2 being from the other end surface 5b of the inlay 5 to the other end surface 6b of the tube member 6, the other end surface 6b being positioned near the other end portion 5B. In the inlay 5, by the engagement portions 12 each having the inclined surface 15 and the corner portion 20, the engagement portions 12 inside the tube member 6 tend to move toward the inclined surfaces 15 rather than moving toward the corner portions 20, in the longitudinal direction (Y direction) of the inlay 5. In consideration of this tendency, maintaining the first distance L1 larger than the second distance L2, enables the inlay 5 to be adequately prevented from falling off the tube member 6 even if the inlay 5 has moved toward the one end portion 5A of the inlay 5 inside the tube member 6.

Furthermore, the engagement portions 12 of the inlay 5 in the RFID tag 1 according to the embodiment are formed on both sides of the inlay 5 in the lateral direction (X direction). The inlay 5 is thereby able to avoid coming into contact with the inner surfaces 11 of the tube member 6 and to be smoothly inserted, when part of the inlay 5 is inserted in the tube member 6, the part being from the one end portion 5A to the engagement portions 12, and the engagement portions 12 are able to be respectively engaged with the inner surfaces 11 of the tube member 6 when insertion operation of the inlay 5 is ended. That is, the insertion load, which is generated in the inlay 5 upon the insertion into the tube member 6, is able to be minimized, and the engagement portions 12 enable adequate restriction of the movement of the inlay 5 inside the tube member 6.

Furthermore, the RFID tag 1 according to the embodiment includes the bag 22 formed of nonwoven fabric or cloth and having the tube member 6 housed therein, and the bag 22 is formed to surround the entirety of the tube member 6. The bag 22 made of cloth thereby enables the feel of the RFID tag 1 to imitate that of the linen 23, and the RFID tag 1 is thereby able to be hidden by the bag 22 from the exterior. Therefore, reduction in the feel of the linen 23 with the RFID tag 1 attached, is able to be minimized, and a change in the exterior of the linen 23, is able to be minimized.

A modified example will hereinafter be described by reference to the drawings. In this modified example, any structural member that is the same as that according to the embodiment will be assigned with the same reference sign as the embodiment, and description thereof will be omitted.

### Modified Example

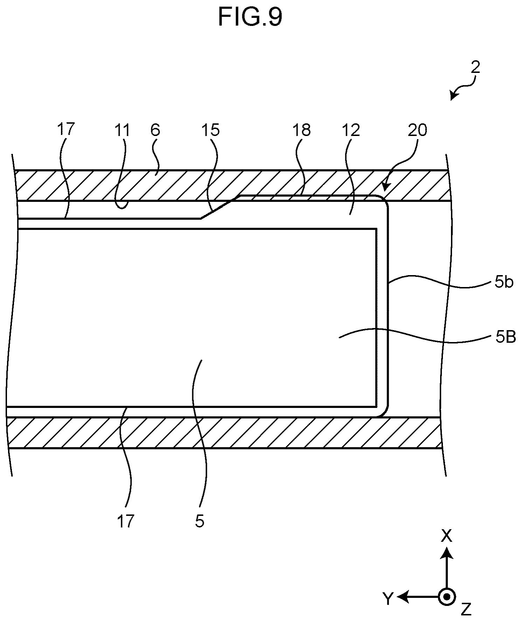

FIG. 9 is a sectional view of main parts of an RFID tag of the modified example. As illustrated in FIG. 9, an inlay 5 of an RFID tag 2 in this modified example, is different from that according to the embodiment in that an engagement portion 12 is formed on only one side of the inlay 5 in a lateral direction (X direction). The inlay 5 in this modified example is formed to be in contact with an inner surface 11 of a tube member 6, over its entire side surface 17 on another side opposite to the one side where the engagement portion 12 has been formed, in the lateral direction (X direction) of the inlay 5.

In this modified example also, similarly to the embodiment, durability against external pressure applied to the inlay 5, is able to be increased by elasticity of the tube member 6, and inserting the inlay 5 into the tube member 6 and fixing the inlay 5 by means of the engagement portion 12, enable the inlay 5 to be prevented from falling off the tube member 6. Therefore, in this modified example also, the durability is able to be increased, a process of manufacturing the RFID tag 2 is able to be simplified, and its productivity is able to be increased.

Furthermore, when the inlay 5 in this modified example is inserted into the tube member 6, the side surface 17 on the other side of the inlay 5 in the lateral direction (X direction) makes contact along the inner surface 11 of the tube member 6 over the entire region from one end portion 5A to another end portion 5B of the inlay 5, the other side being where the engagement portion 12 has not been formed, and the insertion load is thus larger than that according to the embodiment, but the contact area between the inner surface 11 of the tube member 6 and the inlay 5, is able to be increased, and the effect of restricting movement of the inlay 5 is thus able to be increased further.

### Reference Signs List

- 1: RFID TAG
- 5: INLAY
- 5A: ONE END PORTION
- 5a: ONE END SURFACE
- 5B: OTHER END PORTION
- 5b: OTHER END SURFACE (END SURFACE)
- 6: TUBE MEMBER
- 7: SEMICONDUCTOR ELEMENT
- 9: ANTENNA PATTERN
- 8: SUBSTRATE
- 10: PROTECTIVE FILM (PROTECTIVE MEMBER)
- 11: INNER SURFACE
- 15: INCLINED SURFACE
- 18: OUTER PERIPHERAL SURFACE
- 20: CORNER PORTION
- 22: BAG
- L1: FIRST DISTANCE
- L2: SECOND DISTANCE
- X: LATERAL DIRECTION
- Y: LONGITUDINAL DIRECTION, TUBE AXIS DIRECTION
- Z: THICKNESS DIRECTION
- θ1: OBTUSE ANGLE

## Claims

1. An RFID tag, comprising:
an inlay that has a long shape and has: a semiconductor element; a substrate with an antenna pattern, which is formed to be connected to the semiconductor element; and a protective member, which protects both surfaces of the substrate in a thickness direction; and
a tube member having elasticity and having the inlay housed therein from one end portion to another end portion of the inlay in a longitudinal direction, wherein
the inlay has a size formed to be smaller than an inner diameter of the tube member, the size being in a lateral direction of the inlay, and has an engagement portion, which is formed at the other end portion of the inlay in the longitudinal direction, the engagement portion having been extended in the lateral direction of the inlay and engaging with an inner surface of the tube member.

2. The RFID tag according to claim 1, wherein
the engagement portion has an inclined surface, which is formed to be inclined with respect to the longitudinal direction of the inlay, the inclined surface being at an end of the engagement portion, the end being near the one end portion, and
the inclined surface is inclined to form an obtuse angle to an outer peripheral surface of the engagement portion, the outer peripheral surface extending along the inner surface of the tube member.

3. The RFID tag according to claim 2, wherein
the engagement portion has a corner portion, which is formed at an opposite end of the engagement portion, the opposite end being opposite to the end near the one end portion, and
the corner portion is formed of: the outer peripheral surface, which extends along the longitudinal direction of the inlay; and an end surface, which extends along the lateral direction of the inlay.

4. The RFID tag according to claim 1, wherein the tube member has a cross sectional shape that is formed in a flattened shape flattened in a thickness direction of the inlay.

5. The RFID tag according to claim 3, wherein
the inlay has one end surface at the one end portion and another end surface at the other end portion, the one end surface and the other end surface being positioned inside the tube member, and
a first distance is larger than a second distance in a tube axis direction of the tube member, the first distance being from the one end surface of the inlay to one end surface of the tube member, the one end surface positioned near the one end portion, the second distance being from the other end surface of the inlay to another end surface of the tube member, the other end surface being positioned near the other end portion.

6. The RFID tag according to claim 1, wherein the engagement portion is formed on both sides of the inlay in the lateral direction.

7. The RFID tag according to claim 1, further comprising:
a bag formed of nonwoven fabric or cloth and having the tube member housed therein, wherein
the bag is formed to surround the entirety of the tube member.
